# EUROPEAN PATENT APPLICATION

(11) **EP 4 734 477 A1**
(43) Date of publication of application: **29.04.2026**
(21) Application number: 24825190.2
(22) Date of filing: 14.06.2024
(51) Int. Cl.: H04L 65/1069

(54) **IMS CALL ESTABLISHMENT METHOD, AND TERMINAL, SERVER, ELECTRONIC DEVICE AND STORAGE MEDIUM**

(30) Priority: 20.06.2023 CN 202310739337
(71) Applicant: Vivo Mobile Communication Co., Ltd., Dongguan, Guangdong 523863 (CN)
(72) Inventor: MAO, Yuanze, Dongguan, Guangdong 523863 (CN)
(74) Representative: Murgitroyd & Company
(86) International application number: PCT/CN2024/099119
(87) International publication number: WO 2024/260294

(57) **Abstract**

This application discloses an IMS call establishment method, a terminal, a server, an electronic device, and a storage medium. The method includes: in a case that an IMS dedicated bearer is abnormal, sending, by a terminal, first signaling on an IMS default bearer to a network server, where the first signaling is used to notify that the IMS dedicated bearer is abnormal and to instruct the network server to send second signaling to a media server, and the second signaling is used to notify the media server that the IMS dedicated bearer is abnormal and to instruct the media server to switch a bearer of IMS call data of the terminal; receiving, by the terminal, first feedback signaling sent by the network server, where the first feedback signaling is used to notify that the media server has switched the bearer of the IMS call data from the IMS dedicated bearer to the IMS default bearer; and transmitting, by the terminal, the IMS call data on the IMS default bearer based on the first feedback signaling.

## Description

### CROSS-REFERENCE TO RELATED APPLICATION

This application claims priority to Chinese Patent Application No. 202310739337.3, filed on June 20, 2023 and entitled "IMS CALL ESTABLISHMENT METHOD, TERMINAL, SERVER, ELECTRONIC DEVICE, AND STORAGE MEDIUM," which is incorporated herein by reference in its entirety.

### TECHNICAL FIELD

This application pertains to the field of electronic technology, and specifically relates to an IMS call establishment method, a terminal, a server, an electronic device, and a storage medium.

### BACKGROUND

The internet protocol multimedia subsystem (Internet Protocol Multimedia Subsystem, IMS) is a fundamental solution for providing voice and video calls over communication networks, for example, voice over long term evolution (Long Term Evolution, LTE) services and voice over new radio (New Radio, NR) services.

In a communication network utilizing IMS, both parties of a call establish the call through the session initiation protocol (Session Initiation Protocol, SIP) and subsequently send and receive call data, namely voice and video data packets, through the real-time transport protocol (Real Time Streaming Protocol, RTP).

However, for both voice over LTE or voice over new radio (Voice over New Radio, VoNR) based on NR, IMS SIP messages or call data rely on bearers of the bearer network for transmission. During the IMS call establishment procedure, some regional operators experience delay in establishing the IMS dedicated bearer, failure in establishing the IMS dedicated bearer, or automatic disconnection of the IMS dedicated bearer, leading to IMS call termination, which severely affects user calls and ultimately results in IMS call failures.

### SUMMARY

An objective of some embodiments of this application is to provide an IMS call establishment method, a terminal, a server, an electronic device, and a storage medium, so as to avoid the problem of IMS call failures caused by abnormalities in the IMS call dedicated bearer, thereby ensuring the continuity of IMS calls and improving the smoothness of user calls.

According to a first aspect, some embodiments of this application provide an IMS call establishment method, where the method includes: in a case that an IMS dedicated bearer is abnormal, sending, by a terminal, first signaling on an IMS default bearer to a network server, where the first signaling is used to notify that the IMS dedicated bearer is abnormal and to instruct the network server to send second signaling to a media server, and the second signaling is used to notify the media server that the IMS dedicated bearer is abnormal and to instruct the media server to switch a bearer of IMS call data of the terminal; receiving, by the terminal, first feedback signaling sent by the network server, where the first feedback signaling is used to notify that the media server has switched the bearer of the IMS call data from the IMS dedicated bearer to the IMS default bearer; and transmitting, by the terminal, the IMS call data on the IMS default bearer based on the first feedback signaling.

According to a second aspect, some embodiments of this application provide a terminal, where the terminal includes: a sending module configured to, in a case that an IMS dedicated bearer is abnormal, send first signaling on an IMS default bearer to a network server, where the first signaling is used to notify that the IMS dedicated bearer is abnormal and to instruct the network server to send second signaling to a media server, and the second signaling is used to notify the media server that the IMS dedicated bearer is abnormal and to instruct the media server to switch a bearer of IMS call data of the terminal; a receiving module configured to receive first feedback signaling sent by the network server, where the first feedback signaling is used to notify that the media server has switched the bearer of the IMS call data from the IMS dedicated bearer to the IMS default bearer; and a transmission module configured to transmit the IMS call data on the IMS default bearer based on the first feedback signaling received by the receiving module.

According to a third aspect, some embodiments of this application provide an IMS call establishment method, where the method includes: receiving, by a media server, second signaling sent by a network server, where the second signaling is used to notify the media server that an IMS dedicated bearer is abnormal and to instruct the media server to switch a bearer of IMS call data of a terminal, the second signaling is generated based on first signaling received by the network server from the terminal, and the first signaling is used to notify that the IMS dedicated bearer is abnormal and to instruct the network server to send the second signaling to the media server; and based on the second signaling, switching, by the media server, the bearer of the IMS call data from the IMS dedicated bearer to an IMS default bearer, and sending third feedback signaling to the network server, where the third feedback signaling is used to notify the network server that the bearer of the IMS call data has been switched from the IMS dedicated bearer to the IMS default bearer.

According to a fourth aspect, some embodiments of this application provide a server, where the server includes: a receiving module configured to receive second signaling sent by a network server, where the second signaling is used to notify the media server that an IMS dedicated bearer is abnormal and to instruct the media server to switch a bearer of IMS call data of a terminal, the second signaling is generated based on first signaling received by the network server from the terminal, and the first signaling is used to notify that the IMS dedicated bearer is abnormal and to instruct the network server to send the second signaling to the media server; a switching module configured to switch the bearer of the IMS call data from the IMS dedicated bearer to an IMS default bearer based on the second signaling received by the receiving module; and a sending module configured to send third feedback signaling to the network server, where the third feedback signaling is used to notify the network server that the bearer of the IMS call data has been switched from the IMS dedicated bearer to the IMS default bearer.

According to a fifth aspect, some embodiments of this application provide an electronic device, where the electronic device includes a processor and a memory, the memory stores a program or instructions executable on the processor, and when the program or the instructions are executed by the processor, the steps of the method according to the first aspect are implemented.

According to a sixth aspect, some embodiments of this application provide a server, where the server includes a processor and a memory, the memory stores a program or instructions executable on the processor, and when the program or the instructions are executed by the processor, the steps of the method according to the third aspect are implemented.

According to a seventh aspect, some embodiments of this application provide a readable storage medium, where the readable storage medium stores a program or instructions, and when the program or the instructions are executed by a processor, the steps of the method according to the first aspect are implemented.

According to an eighth aspect, some embodiments of this application provide a readable storage medium, where the readable storage medium stores a program or instructions, and when the program or the instructions are executed by a processor, the steps of the method according to the third aspect are implemented.

According to a ninth aspect, some embodiments of this application provide a chip, where the chip includes a processor and a communication interface, the communication interface is coupled to the processor, and the processor is configured to execute a program or instructions to implement the method according to the first aspect.

According to a tenth aspect, some embodiments of this application provide a chip, where the chip includes a processor and a communication interface, the communication interface is coupled to the processor, and the processor is configured to execute a program or instructions to implement the method according to the third aspect.

According to an eleventh aspect, some embodiments of this application provide a computer program product, where the program product is stored in a storage medium, and the program product is executed by at least one processor to implement the method according to the first aspect.

According to a twelfth aspect, some embodiments of this application provide a computer program product, where the program product is stored in a storage medium, and the program product is executed by at least one processor to implement the method according to the third aspect.

According to a thirteenth aspect, some embodiments of this application provide a communication system, including a terminal and a server, where the terminal is configured to execute the steps of the IMS call establishment method according to the first aspect, and the server is configured to execute the steps of the IMS call establishment method according to the third aspect.

In some embodiments of this application, in a case that an IMS dedicated bearer is abnormal, a terminal may send first signaling to a network server to notify that the IMS dedicated bearer is abnormal, causing the network server to send second signaling to a media server to notify the media server that the IMS dedicated bearer is abnormal and to switch a bearer of IMS call data, thereby enabling the media server to switch the bearer of the IMS call data from the IMS dedicated bearer to an IMS default bearer, so that the terminal may transmit the IMS call data on the IMS default bearer. In this solution, by adding a notification signaling procedure for detecting IMS dedicated bearer abnormalities between the terminal and the network server, when an IMS dedicated bearer abnormality occurs, the terminal promptly notifies the network server that the terminal has detected the abnormality in the dedicated bearer or that the bearer needs to be updated, and the network server can promptly notify the terminal to perform corresponding state switching; additionally, by adding a switching and recovery signaling procedure between the network server and the media server, the media server switches the IMS call data to another bearer for transmission. This enables the switching and recovery of the IMS bearer, and allows the IMS call data to be transmitted directly on another bearer when an IMS dedicated bearer abnormality occurs, avoiding voice problems caused by the IMS dedicated bearer abnormality, such as IMS call termination or delay, ensuring the continuity of IMS calls, and improving the smoothness of user calls.

### BRIEF DESCRIPTION OF DRAWINGS

FIG. 1 is a schematic diagram of the architecture of a wireless communication system according to some embodiments of this application;
FIG. 2 is a schematic flowchart of an IMS call establishment method according to some embodiments of this application;
FIG. 3 is a schematic flowchart of an IMS call establishment method according to some embodiments of this application;
FIG. 4 is a schematic flowchart of an IMS call establishment method according to some embodiments of this application;
FIG. 5 is a schematic flowchart of an IMS call establishment method according to some embodiments of this application;
FIG. 6 is a schematic flowchart of an IMS call establishment method according to some embodiments of this application;
FIG. 7 is a schematic flowchart of an IMS call establishment method according to some embodiments of this application;
FIG. 8 is a schematic flowchart of an IMS call establishment method according to some embodiments of this application;
FIG. 9 is a schematic flowchart of an IMS call establishment method according to some embodiments of this application;
FIG. 10 is a schematic structural diagram of a terminal according to some embodiments of this application;
FIG. 11 is a schematic structural diagram of a server according to some embodiments of this application;
FIG. 12 is a schematic diagram of a hardware structure of an electronic device according to some embodiments of this application;
FIG. 13 is a schematic diagram of a hardware structure of an electronic device according to some embodiments of this application; and
FIG. 14 is a schematic diagram of a hardware structure of a server according to some embodiments of this application.

### DESCRIPTION OF EMBODIMENTS

The technical solutions in some embodiments of this application will be clearly described below with reference to the accompanying drawings in some embodiments of this application. It is evident that the described embodiments are only some of the embodiments of this application and not all of them. Based on the embodiments in this application, all other embodiments obtained by those of ordinary skill in the art fall within the scope of protection of this application.

The terms "first," "second," and the like in the specification and claims of this application are used to distinguish similar objects and are not intended to describe a specific order or sequence. It should be understood that the terms so used may be interchanged where appropriate, so that the embodiments of this application may be implemented in an order other than those illustrated or described herein, and the objects distinguished by "first," "second," and the like are generally of the same type and do not limit the number of objects, for example, a first object may be one or may be multiple. In addition, the character "/" generally indicates that the associated objects before and after it are in an "or" relationship.

The following provides a detailed description of the IMS call establishment method according to some embodiments of this application through specific embodiments and their application scenarios in conjunction with the accompanying drawings.

Before the embodiments of this application are introduced, some terms involved in the embodiments of this application are explained. It should be noted that the following explanations are intended to make the embodiments of this application easier to understand and should not be regarded as limiting the scope of protection claimed by the embodiments of this application.

IMS, based on the SIP protocol, provides call services through the packet switch (Packet Switch, PS) domain connected via the transmission control protocol/internet protocol (Transmission Control Protocol/Internet Protocol, TCP/IP), leveraging the bandwidth and latency characteristics of LTE and NR to provide high-quality call services.

IMS SIP messages are transmitted based on the TCP/IP protocol and may use either TCP or user datagram protocol (User Datagram Protocol, UDP) for transmission. IMS-related protocols require that when the length of a SIP message packet exceeds a specified threshold, TCP be used for transmission. However, in some implementations of IMS in terminals and networks, there are cases where UDP is mandatorily used, especially when the network sends SIP messages, predominantly over UDP. In a communication network utilizing IMS, both parties of a call establish the call through the SIP protocol and subsequently send and receive voice and video data packets through RTP. For both VoLTE based on LTE or VoNR based on NR, IMS SIP messages or media data rely on the bearer (bearer) of the bearer network for transmission.

The IMS call establishment method in some embodiments of this application may be applied to scenarios of IMS call data transmission when an IMS dedicated bearer is abnormal.

The technologies described in some embodiments of this application are not limited to LTE/LTE-Advanced (LTE-Advanced, LTE-A) systems, and may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems.

The terms "system" and "network" in some embodiments of this application are often used interchangeably, and the technology described herein may be used in the above-mentioned systems and radio technologies as well as other systems and radio technologies. In the following descriptions, an NR system is described for an illustration purpose, and NR terms are used in most of the following descriptions, although these technologies may also be applied to other systems than an NR system, for example, the 6th generation (6th Generation, 6G) communication system.

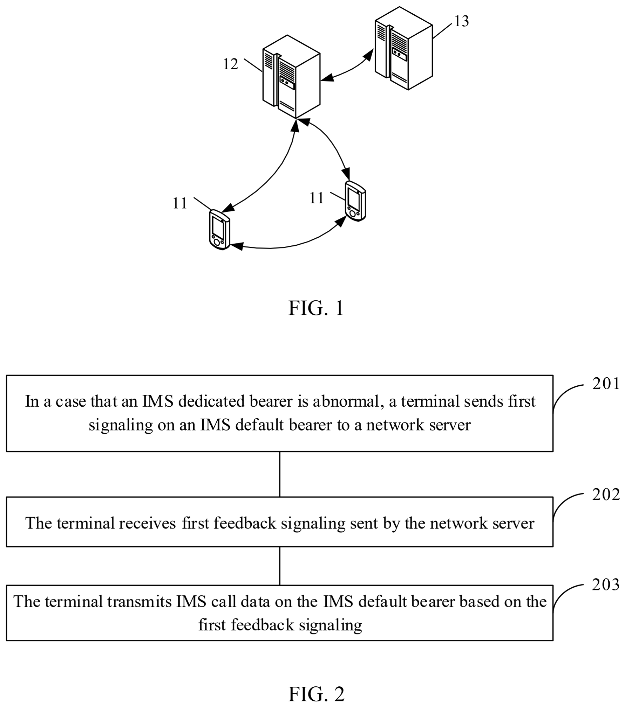

FIG. 1 is a structural diagram of a wireless communication system to which some embodiments of this application are applicable. The wireless communication system includes at least one terminal 11, a network server 12, and a media server 13.

A connection may be established between at least one terminal device 11 and the network server 12, and a connection may be established between the network server 12 and the media server 13.

It should be noted that FIG. 1 illustrates an example where the connections between the at least one terminal device 11 and the network server 12 and between the network server 12 and the media server 13 are wired network connections, which does not impose any limitation on some embodiments of this application. It can be understood that, in actual implementation, the connection between the at least one terminal device 11 and the network server 12 may alternatively be a wireless network connection, and the connection between the network server 12 and the media server 13 may alternatively be a wireless network connection, which can be specifically determined based on actual usage requirements.

The at least one terminal 11 includes a mobile originated (Mobile Originated, MO) terminal and a mobile terminated (Mobile Terminated, MT) terminal. The at least one terminal 11 may communicate with each other, for example, to transmit call data. The network server, also referred to as a core network device, is configured to forward signaling and data between the at least one terminal 11 and the media server 13, and to manage operations such as bearer switching and network updates performed by the media server 13. The media server is a third-party server or an operator server, configured to perform bearer switching for data between the at least one terminal 11 and to perform operations such as network updates.

Specifically, the at least one terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a handheld computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), a vehicle user equipment (Vehicle User Equipment, VUE), a ship-borne equipment, a pedestrian user equipment (Pedestrian User Equipment, PUE), a smart home (home devices with a wireless communication function, for example, a refrigerator, a television, a washing machine, or a furniture), a game console, a personal computer (Personal Computer, PC), a teller machine, or self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. The vehicle user equipment may also be referred to as a vehicle terminal, a vehicle controller, a vehicle module, a vehicle component, a vehicle chip, a vehicle unit, or the like. It should be noted that the terminal is not limited to any particular type in some embodiments of this application.

The network server 12 may include but is not limited to at least one of the following: a core network node, a core network function, a mobility management entity (Mobility Management Entity, MME), an access management function (Access Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF).

The media server 13, which can manage resources, is a computer device that provides services to terminals. The media server 13 may include a processor, a hard disk, a memory, a bus, and the like. For example, the media server 13 may provide an IMS bearer for terminals to transmit IMS call data.

Currently, it has been observed that during the IMS call establishment procedure, many regional operators experience cases such as delay in establishing the IMS dedicated bearer, failure in establishing the IMS dedicated bearer, or automatic disconnection of the IMS dedicated bearer, leading to IMS call termination, which severely affects user calls.

Therefore, based on this, the present solution proposes an IMS call establishment scheme based on bearer switching. In a case that an IMS dedicated bearer is abnormal, a terminal may send signaling to a network server to notify that the IMS dedicated bearer is abnormal, causing the network server to send signaling to a media server to notify that the IMS dedicated bearer is abnormal and to perform a bearer switching operation for the IMS call data, thereby enabling the media server to switch the bearer of the IMS call data from the IMS dedicated bearer to an IMS default bearer, so that the terminal may transmit the IMS call data on the IMS default bearer.

This solution adds a notification signaling procedure for detecting IMS dedicated bearer abnormalities between the terminal and the network server. In this way, when an IMS dedicated bearer abnormality occurs, the terminal promptly notifies the network server that the terminal has detected the abnormality in the dedicated bearer or that the bearer needs to be updated, and the network server can promptly notify the terminal to perform corresponding state switching. Moreover, through addition of a switching and recovery signaling procedure between the network server and the media server, the media server switches the IMS call data to another bearer for transmission. This enables the switching and recovery of the IMS bearer, and allows the IMS call data to be transmitted directly on another bearer when an IMS dedicated bearer abnormality occurs, avoiding voice problems caused by the IMS dedicated bearer abnormality, such as IMS call termination or delay, ensuring the continuity of IMS calls, and improving the smoothness of user calls.

It can be understood that this solution enables seamless reuse of IMS bearers, and fully utilizes the correlation and maximum availability between IMS bearers, effectively reducing abnormal call terminations in video or audio call scenarios.

The execution entity of the IMS call establishment method according to some embodiments of this application may be a terminal, a functional module or entity within the terminal, or an IMS call establishment apparatus. The following takes the terminal as an example to describe the technical solutions according to some embodiments of this application.

Based on the above communication system, some embodiments of this application provide an IMS call establishment method. FIG. 2 is a flowchart of an IMS call establishment method according to some embodiments of this application. As shown in FIG. 2, the IMS call establishment method according to some embodiments of this application may include the following steps 201 to 203.

Step 201: In a case that an IMS dedicated bearer is abnormal, a terminal sends first signaling on an IMS default bearer to a network server.

In some embodiments of this application, the first signaling is used to notify that the IMS dedicated bearer is abnormal and to instruct the network server to send second signaling to a media server, and the second signaling is used to notify the media server that the IMS dedicated bearer is abnormal and to instruct the media server to switch a bearer of IMS call data of the terminal.

It should be noted that the bearer described in this application refers to a logical channel between the terminal and a core network, that is, a pathway for signaling and service data transmission. Optionally, it may include a logical channel between the terminal and a base station and a logical channel between the base station and the core network.

The IMS dedicated bearer is dynamically established and refers to a dedicated bearer established based on different service types to transmit user service data, meaning that the IMS dedicated bearer is established to meet the transmission requirements for a specific quality of service (Quality of Service, QoS). During an IMS session of a user, the IMS dedicated bearer remains active, and once the session ends, the IMS dedicated bearer is deactivated to release related radio resources, such as a data radio bearer (Data Radio Bearer, DRB).

The IMS default bearer is statically established and is a user bearer for data and signaling that satisfies default QoS. It can be simply understood as a bearer that provides best-effort IP connectivity, offering users a permanently online IP transmission service. To be specific, the IMS default bearer remains active throughout the validity period of the IMS user registration, allowing the terminal to initiate the IMS call procedure at any time. Certainly, if the terminal is powered off, the IMS registration expires, or the user cancels registration, the default bearer is deactivated, and related resources are released.

It should be noted that the IMS dedicated bearer is established based on the establishment of the IMS default bearer. Additionally, the IMS dedicated bearer may be initiated by a network or may be initiated by the terminal, while the IMS default bearer can only be initiated by the network. The IMS dedicated bearer may be a guaranteed bit rate (Guaranteed Bit Rate, GBR) bearer or may be a non-GBR (Non-GBR) bearer, while the default bearer can only be a non-GBR bearer.

In some embodiments of this application, the IMS dedicated bearer abnormality includes, but is not limited to, at least one of the following: failure in establishing the IMS dedicated bearer, delay in establishing the IMS dedicated bearer, or automatic disconnection of the IMS dedicated bearer. The delay in establishing the IMS dedicated bearer refers to the completion of the IMS dedicated bearer establishment after a timer expires, where the timer is used to time the IMS dedicated bearer establishment procedure.

In some embodiments of this application, the IMS dedicated bearer abnormality may be detected by the terminal. In one case, the terminal may detect whether the IMS dedicated bearer is abnormal during initiation of the IMS call procedure; and in another case, the terminal may detect whether the IMS dedicated bearer is abnormal during the IMS call procedure.

In some embodiments of this application, step 201 may specifically be implemented through the following step 201a or step 201b.

Step 201a: In the case that the IMS dedicated bearer is abnormal during initiation of an IMS call, the terminal sends first signaling on an IMS default bearer to the network server.

It can be understood that when the terminal initiates the IMS call procedure and the IMS call has not yet been established, if it detects that the established IMS dedicated bearer is abnormal, the terminal may send the first signaling on the IMS default bearer to the network server to notify the network server that the IMS dedicated bearer is abnormal.

In some embodiments of this application, the MO terminal and the MT terminal register with the IMS network and establish the IMS default bearer. The MO terminal may send call establishment signaling such as an INVITE message to the network server, and at this time, an abnormality occurs in establishing the IMS dedicated bearer between the MO terminal and the network server, for example, a delay or failure in establishing the IMS dedicated bearer; when the MT terminal receives the call establishment signaling from the MO terminal, it may send call establishment feedback signaling to the network server and negotiate a corresponding session description protocol (Session Description Protocol, SDP) parameter with the network, and at this time, an abnormality occurs in establishing the IMS dedicated bearer between the MT terminal and the network server; meaning that when initiating the IMS call, if the IMS dedicated bearer is abnormal, the terminal sends the first signaling to the network server, where the terminal includes at least one of the MO terminal and the MT terminal.

It should be noted that after the MO terminal sends the call establishment signaling to the network server, if the IMS dedicated bearer between the MO terminal and the network server is established normally, the MO terminal and the MT terminal may directly conduct the IMS call, that is, transmit IMS call data, through the established IMS dedicated bearer.

In some embodiments of this application, the SDP parameter may include, but is not limited to, at least one of the following: network bandwidth, port number, and encoding method.

Step 201b: In the case that the IMS dedicated bearer is abnormal during an IMS call procedure, the terminal sends first signaling on an IMS default bearer to the network server.

It can be understood that after the terminal initiates the IMS call procedure and completes the establishment of the IMS call, it conducts the IMS call, that is, transmits IMS call data, on the established IMS dedicated bearer. During the IMS call procedure, if it detects that the IMS dedicated bearer is abnormal, the terminal may send the first signaling on the IMS default bearer to the network server to notify the network server that the IMS dedicated bearer is abnormal.

In some embodiments of this application, the MO terminal and the MT terminal register with the IMS network and establish the IMS default bearer. The MO terminal may send call establishment signaling, for example, an INVITE message, to the network server, which is forwarded to the MT terminal through the network server, and at this time, the MO terminal needs to establish an IMS dedicated bearer with the network server. After the MT terminal receives the call establishment signaling sent by the network server, it performs corresponding processing and interface update, and establishes an IMS dedicated bearer with the network server. The MT terminal sends call establishment feedback information to the network server and negotiates a corresponding SDP parameter with the network. After receiving the call establishment feedback signaling from the MT terminal, the network server forwards the call establishment feedback signaling to the MO terminal, and the MO terminal performs corresponding interface and state updates, at which point the call between the MO terminal and the MT terminal is successfully established. After a period of time, an abnormality occurs in the IMS dedicated bearer between the MO terminal and the MT terminal and the network server, meaning that during the IMS call procedure, the IMS dedicated bearer is abnormal, and the terminal sends the first signaling to the network server, where the terminal includes at least one of the MO terminal and the MT terminal.

With this solution, whether an IMS dedicated bearer abnormality is detected during initiation of an IMS call or an IMS dedicated bearer abnormality is detected during the IMS call procedure, the terminal may notify the network server that the IMS dedicated bearer is abnormal, enabling the network server to understand that the dedicated bearer for the IMS call is abnormal, thereby implementing bearer switching for the IMS call. To be specific, a direct bearer switching for the IMS call can be implemented through this solution either before the IMS call or during the IMS call, ensuring the continuity of the IMS call.

In some embodiments of this application, the first signaling may be a SIP message. For example, "a terminal sends first signaling on an IMS default bearer to a network server" in step 201, step 201a, or step 201b may specifically be implemented through the following step 201c.

Step 201c: The terminal sends a SIP message to the network server on the IMS default bearer.

In some embodiments of this application, the SIP message is in the form of INVITE signaling, in the form of UPDATE signaling, or in the form of NOTIFY signaling.

In some embodiments of this application, the SIP message includes at least one of the following: calling and called party numbers, a media type supported for transmission by the terminal, network capability information supported by the terminal, IP information of the terminal, and cause information for IMS dedicated bearer abnormality.

It can be understood that after an abnormality occurs in establishing the dedicated bearer between at least one of the MO terminal and the MT terminal and the network server, dedicated bearer abnormality signaling is sent to the network server. The dedicated bearer abnormality signaling herein is the aforementioned first signaling, which is additional signaling 1 introduced in this solution. This signaling 1 is a signaling interaction between the terminal and the network server, and its role is to notify the network server that the IMS dedicated bearer is abnormal. The form of this signaling 1 includes the following three cases:
(1) SIP message sent in the form of INVITE signaling, where the form of INVITE signaling, in addition to carrying the calling and called party numbers, a media type supported for transmission by the terminal, and NR or LTE capability information supported by the terminal, also includes cause information for IMS dedicated bearer abnormality.
(2) SIP message sent in the form of UPDATE signaling, where the form of UPDATE signaling, in addition to carrying the calling and called party numbers, a media type supported for transmission by the terminal, NR or LTE capability information supported by the terminal, and IP information of the terminal, also includes cause information for IMS dedicated bearer abnormality.
(3) SIP message sent in the form of NOTIFY signaling, where the NOTIFY signaling, in addition to carrying the calling and called party numbers, a media type supported for transmission by the terminal, and NR or LTE capability information supported by the terminal, also includes cause information for IMS dedicated bearer abnormality.

It should be noted that all three forms of signaling may serve as the first signaling in this solution, acting between the network server and the terminal for IMS dedicated bearer notification and state updates, and may be used at different time periods. For example, the INVITE signaling or the UPDATE signaling may be used before ringing, and the NOTIFY signaling may be used after ringing; or one form, such as the INVITE signaling, may be used consistently. This solution does not impose restrictions, and the form is determined according to the specific needs of the implementer.

In some embodiments of this application, the calling and called party numbers include the numbers of the MO terminal and the MT terminal, used for the network to identify the calling and called parties.

In some embodiments of this application, the media type supported for transmission by the terminal refers to a media type negotiated between the network and the terminal that the terminal can transmit. Optionally, the media type supported for transmission by the terminal may include at least one of the following: voice type, video type, and other data types.

In some embodiments of this application, the IP information of the terminal refers to the IP address assigned to UE by the network.

In some embodiments of this application, the network capability information supported by the terminal includes at least one of the following: capability of the terminal to support LTE and capability of the terminal to support NR.

In some embodiments of this application, the cause information for IMS dedicated bearer abnormality may include, but is not limited to, at least one of the following: network-side abnormality cause and terminal-side abnormality cause.

The network-side abnormality cause includes, but is not limited to, at least one of the following: insufficient network resources, network failure, or network server abnormality, for example, information transmission delay at the network server.

The terminal-side abnormality cause includes, but is not limited to, at least one of the following: slow terminal signaling response process and frozen terminal call process.

With this solution, the terminal sends a SIP message to the network server to carry some information about the terminal and cause information for IMS dedicated bearer abnormality, enabling the network server to understand the reasons for the IMS dedicated bearer abnormality, thereby facilitating the network server in determining whether to trigger the media server to perform bearer switching for the IMS call and in determining the bearer to be switched to, implementing accurate bearer switching for the IMS call.

Step 202: The terminal receives first feedback signaling sent by the network server.

In some embodiments of this application, the first feedback signaling is used to notify that the media server has switched the bearer of the IMS call data from the IMS dedicated bearer to the IMS default bearer.

In some embodiments of this application, after receiving feedback signaling from the media server and learning that the media server has switched the bearer of the IMS call data from the IMS dedicated bearer to the IMS default bearer, the network server sends the first feedback signaling to at least one of the MO terminal and the MT terminal to notify that the network is ready to switch the IMS call data to the IMS default bearer for transmission. This is the feedback signaling for the aforementioned first signaling in this solution, which may also be a SIP message.

In some embodiments of this application, in the case of normal switching, that is, when the media server successfully performs the bearer switching, the network server sends the first feedback signaling to the terminal, for example, in the form of 200 OK signaling. In the case of abnormal switching, that is, when the media server fails to perform the bearer switching, the network server sends feedback to the terminal in the form of an error code + ERROR signaling, indicating that the media server will not perform bearer switching for the IMS call data.

Step 203: The terminal transmits the IMS call data on the IMS default bearer based on the first feedback signaling.

In some embodiments of this application, the IMS call data includes at least one of the following: IMS voice call data and IMS video call data. It should be noted that the data described in this application may be understood as data packets, such as audio data packets and video data packets.

In some embodiments of this application, after receiving the first feedback signaling, the MT terminal may send call establishment feedback signaling to the network server to notify the network server that the MT terminal is ready to establish the call. After receiving the call establishment feedback signaling from the MT terminal, the network server forwards the call establishment feedback signaling to the MO terminal. After receiving the call establishment feedback signaling, the MO terminal completes the call establishment between the MO terminal and the MT terminal to transmit the IMS call data on the IMS default bearer.

In the IMS call establishment method according to some embodiments of this application, in a case that an IMS dedicated bearer is abnormal, the terminal can promptly send signaling to the network server to notify that the IMS dedicated bearer is abnormal, causing the network server to promptly notify the media server to perform a bearer switching operation for the IMS call data. After the media server switches the bearer of the IMS call data from the IMS dedicated bearer to the IMS default bearer, it provides feedback on a bearer switching result to the terminal, enabling the terminal to transmit the IMS call data on the IMS default bearer. This enables the switching and recovery of the IMS bearer, and allows the IMS call data to be transmitted directly on another bearer when an IMS dedicated bearer abnormality occurs, avoiding voice problems caused by the IMS dedicated bearer abnormality, such as IMS call termination or delay, ensuring the continuity of IMS calls, and improving the smoothness of user calls.

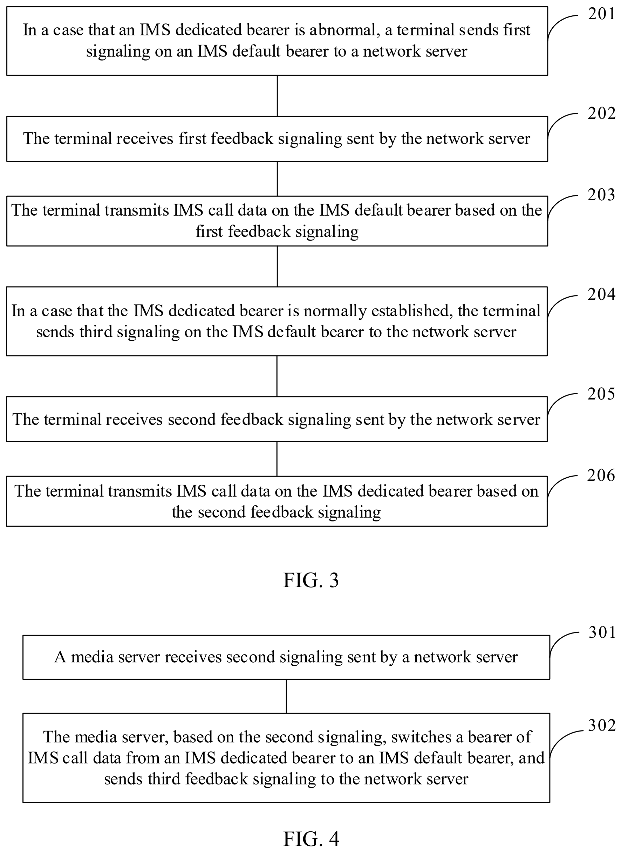

In some embodiments of this application, as shown in FIG. 3 in conjunction with FIG. 2, after step 203, the IMS call establishment method according to some embodiments of this application further includes the following steps 204 to 206.

Step 204: In a case that an IMS dedicated bearer is normally established, the terminal sends third signaling on the IMS default bearer to the network server.

In some embodiments of this application, the third signaling is used to notify that the IMS dedicated bearer has been normally established.

In some embodiments of this application, after the terminal transmits IMS call data on the IMS default bearer for a duration, if the IMS dedicated bearer between the MO terminal and the MT terminal and the network server is normally established, at least one of the MO terminal and the MT terminal sends IMS dedicated bearer establishment notification signaling to the network server to notify the network server that the IMS dedicated bearer has been normally established. It should be noted that the IMS dedicated bearer establishment notification signaling herein is the aforementioned third signaling.

In some embodiments of this application, the third signaling may be a SIP message, and the form of the SIP message includes the following three cases:
1. SIP message sent in the form of INVITE signaling, where the form of INVITE signaling, in addition to carrying the calling and called party numbers, a media type supported for transmission by the terminal, and NR or LTE capability information supported by the terminal, also includes indication information that the IMS dedicated bearer is normal.
2. SIP message sent in the form of UPDATE signaling, where the form of UPDATE signaling, in addition to carrying the calling and called party numbers, a media type supported for transmission by the terminal, NR or LTE capability information supported by the terminal, and IP information of the terminal, also includes indication information that the IMS dedicated bearer is normal.
3. SIP message sent in the form of NOTIFY signaling, where the form of NOTIFY signaling, in addition to carrying the calling and called party numbers, a media type supported for transmission by the terminal, and NR or LTE capability information supported by the terminal, also includes indication information that the IMS dedicated bearer is normal.

In some embodiments of this application, the normal establishment of the IMS dedicated bearer includes, but is not limited to, at least one of the following: successful establishment of the IMS dedicated bearer, completion of the IMS dedicated bearer establishment before the timer expires, and maintaining the connection of the IMS dedicated bearer. The timer is used to time the IMS dedicated bearer establishment procedure.

Step 205: The terminal receives second feedback signaling sent by the network server.

In some embodiments of this application, the second feedback signaling is used to notify that the media server has switched the bearer of the IMS call data from the IMS default bearer to the IMS dedicated bearer.

Step 206: The terminal transmits the IMS call data on the IMS dedicated bearer based on the second feedback signaling.

It can be understood that after receiving feedback signaling from the media server and learning that the media server has switched the bearer of the IMS call data from the IMS default bearer to the IMS dedicated bearer, the network server sends the second feedback signaling to at least one of the MO terminal and the MT terminal to notify that the media server has switched the IMS call data to the IMS dedicated bearer for transmission, at which point the switching from the IMS default bearer to the IMS dedicated bearer is completed, ensuring the continuity of the IMS call.

With this solution, in a case that the IMS dedicated bearer is normally established, the terminal can promptly send signaling to the network server to notify that the IMS dedicated bearer has been normally established, causing the network server to promptly notify the media server to perform a bearer switching operation for the IMS call data. After the media server switches the bearer of the IMS call data from the IMS default bearer to the IMS dedicated bearer, it provides feedback on a bearer switching result to the terminal, enabling the terminal to transmit the IMS call data on the IMS dedicated bearer. This enables the switching and recovery of the IMS bearer, and allows switching to the IMS dedicated bearer, that better meets specific QoS transmission requirements, for transmission when the IMS dedicated bearer is restored to normal, ensuring the continuity and quality of the IMS call.

The execution entity of the IMS call establishment method according to some embodiments of this application may be a media server, a functional module or entity in the media server, or an IMS call establishment apparatus. The following takes the media server as an example to describe the technical solutions according to some embodiments of this application.

Based on the above communication system, some embodiments of this application further provide an IMS call establishment method. FIG. 4 is a flowchart of an IMS call establishment method according to some embodiments of this application. As shown in FIG. 4, the IMS call establishment method according to some embodiments of this application may include the following steps 301 and 302.

Step 301: A media server receives second signaling sent by a network server.

In some embodiments of this application, the second signaling is used to notify the media server that an IMS dedicated bearer is abnormal and to instruct the media server to switch a bearer of IMS call data of a terminal. The second signaling is generated based on first signaling received by the network server from the terminal, and the first signaling is used to notify the network server that the IMS dedicated bearer is abnormal and to instruct the network server to send the second signaling to the media server.

In some embodiments of this application, after receiving the first signaling sent by at least one of the MO terminal and the MT terminal, that is, signaling notifying that the IMS dedicated bearer is abnormal, the network server sends bearer switching signaling to the media server to notify the media server that the current IMS dedicated bearer is abnormal, and after establishing the IMS call, to switch the IMS call data to an IMS default bearer for transmission. It should be noted that the bearer switching signaling herein is the aforementioned second signaling.

In some embodiments of this application, the second signaling may be a SIP message or request-response signaling. For example, step 301 may specifically be implemented through the following step 301a.

Step 301a: The media server receives a SIP message or request-response signaling sent by the network server.

In some embodiments of this application, the SIP message is in the form of INVITE signaling.

In some embodiments of this application, the SIP message includes at least one of the following: calling and called party numbers, a media type supported for transmission by the terminal, network capability information supported by the terminal, IP information of the network server, and duration information of a bearer timeout timer.

The duration information of the bearer timeout timer indicates a timing for the media server to send a NOTIFY message to the network server, where the NOTIFY message is used to inquire whether the network server continues to maintain the current bearer.

It can be understood that after receiving the first signaling sent by at least one of the MO terminal and the MT terminal, the network server sends notification bearer switching signaling to the media server. The notification bearer switching signaling herein is the aforementioned second signaling, which is additional signaling 2 introduced in this solution. This signaling 2 is a signaling interaction between the network server and the media server, and its role is to notify the media server to switch the bearer for transmitting IMS call data and to update the network. The form of this signaling 2 includes the following two cases:

1. SIP message sent in the form of INVITE signaling, where the INVITE signaling carries the calling and called party numbers, a media type supported for transmission by the terminal, NR or LTE capability information supported by the terminal, IP information of the network server, and duration information T of the bearer timeout timer. After sending the SIP message for duration T, the media server sends a NOTIFY message to the network server to inquire whether the network server continues to maintain the current bearer.

After receiving the NOTIFY message, if the network server needs to maintain the bearer, it sends 200 OK signaling to the media server, and the 200 OK signaling must carry the calling and called party numbers, a media type supported for transmission by the terminal, NR or LTE capability information supported by the terminal, IP information of the network server, and duration information T of the bearer timeout timer. The current bearer is maintained for continued data packet transmission only when the parameter carried in the 200 OK signaling received by the media server is the same as that carried in the original INVITE signaling; otherwise, the bearer is disconnected, for example, if the 200 OK signaling is not received from the network server, or if the parameter carried in the received 200 OK signaling is different from that carried in the original INVITE signaling, the bearer is disconnected.

In some embodiments of this application, the parameter carried in the 200 OK signaling being the same as that carried in the original INVITE signaling can be understood as: the calling and called party numbers, a media type supported for transmission by the terminal, NR or LTE capability information supported by the terminal, IP information of the network server, and duration information T of the bearer timeout timer carried in the 200 OK signaling are all the same as those in the original INVITE signaling.

In some embodiments of this application, the parameter carried in the 200 OK signaling being different from that carried in the original INVITE signaling can be understood as: at least one of the calling and called party numbers, a media type supported for transmission by the terminal, NR or LTE capability information supported by the terminal, IP information of the network server, and duration information T of the bearer timeout timer carried in the 200 OK signaling is different from those in the original INVITE signaling.

2. Request and response (Request and Response) signaling sent in the form of Request signaling, where the Request signaling carries the calling and called party numbers, a media type supported for transmission by the terminal, NR or LTE capability information supported by the terminal, IP information of the network server, and duration information T of the bearer timeout timer. After sending the SIP message for duration T, the media server sends a NOTIFY message to the network server to inquire whether the network server continues to maintain the current bearer.

After receiving the NOTIFY message, if the network server needs to maintain the bearer, it sends 200 OK signaling to the media server, and the 200 OK signaling must carry the calling and called party numbers, a media type supported for transmission by the terminal, NR or LTE capability information supported by the terminal, IP information of the network server, and duration information T of the bearer timeout timer. The current bearer is maintained for continued data packet transmission only when the parameter carried in the 200 OK signaling received by the media server is the same as that carried in the original Request signaling, for example, when the calling and called party numbers, a media type supported for transmission by the terminal, NR or LTE capability information supported by the terminal, IP information of the network server, and duration information T of the bearer timeout timer carried in the two are all the same; otherwise, the bearer is disconnected, for example, if the 200 OK signaling is not received from the network server, or if the parameter carried in the received 200 OK signaling is different from that carried in the original Request signaling, the bearer is disconnected. For instance, if at least one of the calling and called party numbers, a media type supported for transmission by the terminal, NR or LTE capability information supported by the terminal, IP information of the network server, and duration information T of the bearer timeout timer carried in the 200 OK signaling is different from those in the original Request signaling, the bearer is disconnected.

In some embodiments of this application, the IP information of the network server refers to the IP address information of the network server.

With this solution, the media server receives the SIP message or request-response signaling sent by the network server to, based on the information carried in the SIP message or request-response signaling, determine whether to perform bearer switching for the IMS call and to determine the bearer to be switched to, implementing accurate switching of the IMS call bearer.

Step 302: The media server, based on the second signaling, switches the bearer of the IMS call data from the IMS dedicated bearer to the IMS default bearer and sends third feedback signaling to the network server.

In some embodiments of this application, the third feedback signaling is used to notify that the bearer of the IMS call data has been switched from the IMS dedicated bearer to the IMS default bearer.

It can be understood that after receiving the second signaling sent by the network server, the media server records relevant information such as the calling and called party numbers, a media type supported for transmission by the terminal, NR or LTE capability information supported by the terminal, IP information of the network server, and duration information of the bearer timeout timer for the default bearer to be switched to, and then sends feedback signaling to the network server to notify the network server that it is ready to switch the IMS call data to the IMS default bearer for transmission. The feedback signaling herein is the feedback signaling of the media server, which is the feedback signaling for the aforementioned signaling 2 in this solution, that is, the aforementioned third feedback signaling. The form of this feedback signaling includes the following two cases:
1. When the second signaling is a SIP message, the third feedback signaling is sent in the form of 200 OK signaling.
2. When the second signaling is request-response signaling, the third feedback signaling is sent in the form of Response signaling.

It should be noted that the above two forms apply to the case of normal switching, that is, when the media server successfully performs the bearer switching, the media server sends the third feedback signaling to the network server. In the case of abnormal switching, that is, when the media server fails to perform the bearer switching, the media server sends feedback to the network server in the form of an error code + ERROR signaling, indicating that the media server will not perform bearer switching for the IMS call data.

In the IMS call establishment method according to some embodiments of this application, the media server may, based on the second signaling sent by the network server, learn that the IMS dedicated bearer is abnormal, thereby promptly switching the bearer of the IMS call data from the IMS dedicated bearer to the IMS default bearer and sending a bearer switching result to the network server, enabling the terminal to transmit the IMS call data on the IMS default bearer. By adding a switching and recovery signaling procedure between the network server and the media server, the media server switches the IMS call data to another bearer for transmission, enabling the switching and recovery of the IMS bearer, allowing the IMS call data to be transmitted directly on another bearer when an IMS dedicated bearer abnormality occurs, avoiding voice problems caused by the IMS dedicated bearer abnormality, such as IMS call termination or delay, ensuring the continuity of IMS calls, and improving the smoothness of user calls.

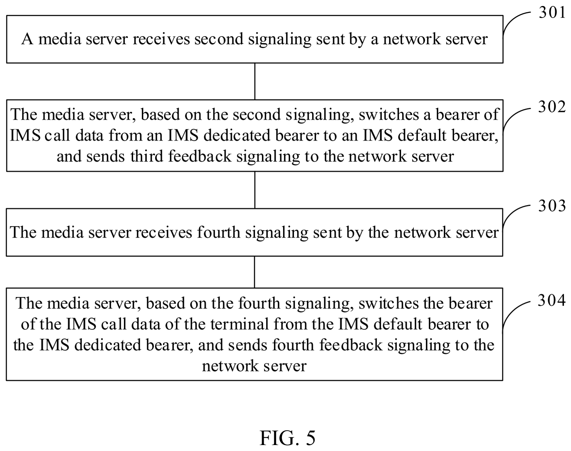

In some embodiments of this application, as shown in FIG. 5 in conjunction with FIG. 4, after step 302, the IMS call establishment method according to some embodiments of this application further includes the following steps 303 and 304.

Step 303: The media server receives fourth signaling sent by the network server.

In some embodiments of this application, the fourth signaling is used to notify the media server that the IMS dedicated bearer has been normally established and to instruct the media server to switch the bearer of the IMS call data of the terminal.

In some embodiments of this application, after receiving the IMS dedicated bearer establishment notification signaling sent by at least one of the MO terminal and the MT terminal, the network server sends the fourth signaling to the media server to notify the media server that the current IMS dedicated bearer has been normally established and that the IMS call data can be switched to the IMS dedicated bearer for transmission. It should be noted that the IMS dedicated bearer establishment notification signaling herein is the aforementioned third signaling.

In some embodiments of this application, the fourth signaling may be a SIP message or request-response signaling. For example, step 303 may specifically be implemented through the following step 303a.

Step 303a: The media server receives a SIP message or request-response signaling sent by the network server.

In some embodiments of this application, the SIP message is in the form of CANCEL signaling.

In some embodiments of this application, the fourth signaling can be understood as a signaling interaction between the network server and the media server, and its role is to notify the media server to switch the bearer for transmitting IMS call data and to update the network. The form of this fourth signaling includes the following two cases:
1. SIP message sent in the form of CANCEL signaling, where the form of CANCEL signaling carries the calling and called party numbers, a media type supported for transmission by the terminal, NR or LTE capability information supported by the terminal, IP information of the network server, and duration information T of the bearer timeout timer. After receiving the form of CANCEL signaling, the media server cancels the transmission of IMS call data on the default bearer and switches to the IMS dedicated bearer for transmission.
2. Request and response (Request and Response) signaling sent in the form of Request signaling, where the Request signaling carries the calling and called party numbers, a media type supported for transmission by the terminal, NR or LTE capability information supported by the terminal, IP information of the network server, and duration information T of the bearer timeout timer. After receiving the form of Request signaling, the media server cancels the transmission of IMS call data on the default bearer and switches to the IMS dedicated bearer for transmission.

Step 304: The media server, based on the fourth signaling, switches the bearer of the IMS call data of the terminal from the IMS default bearer to the IMS dedicated bearer and sends fourth feedback signaling to the network server.

In some embodiments of this application, the fourth feedback signaling is used to notify the network server that the bearer of the IMS call data has been switched from the IMS default bearer to the IMS dedicated bearer.

It can be understood that after receiving the fourth signaling, the media server switches the IMS call data to the IMS dedicated bearer for transmission and then sends feedback signaling to the network server to notify the network server that the IMS call data has been switched to the IMS dedicated bearer for transmission. The feedback signaling herein is the feedback signaling of the media server, which is the feedback signaling for the aforementioned fourth signaling in this solution, that is, the aforementioned fourth feedback signaling. The form of this feedback signaling includes the following two cases:
1. When the fourth signaling is a SIP message, the fourth feedback signaling is sent in the form of 200 OK signaling.
2. When the fourth signaling is request-response signaling, the fourth feedback signaling is sent in the form of Response signaling.

It should be noted that the above two forms apply to the case of normal switching, that is, when the media server successfully performs the bearer switching, the media server sends the fourth feedback signaling to the network server. In the case of abnormal switching, that is, when the media server fails to perform the bearer switching, the media server sends feedback to the network server in the form of an error code + ERROR signaling, indicating that the media server will not perform bearer switching for the IMS call data.

With this solution, the media server may, based on the fourth signaling sent by the network server, learn that the IMS dedicated bearer has been normally established, thereby promptly switching the bearer of the IMS call data from the IMS default bearer to the IMS dedicated bearer and sending a bearer switching result to the network server, enabling the terminal to transmit the IMS call data on the IMS dedicated bearer. This enables the switching and recovery of the IMS bearer, and allows switching to the IMS dedicated bearer, that better meets specific QoS transmission requirements, for transmission when the IMS dedicated bearer is restored to normal, ensuring the continuity and quality of the IMS call.

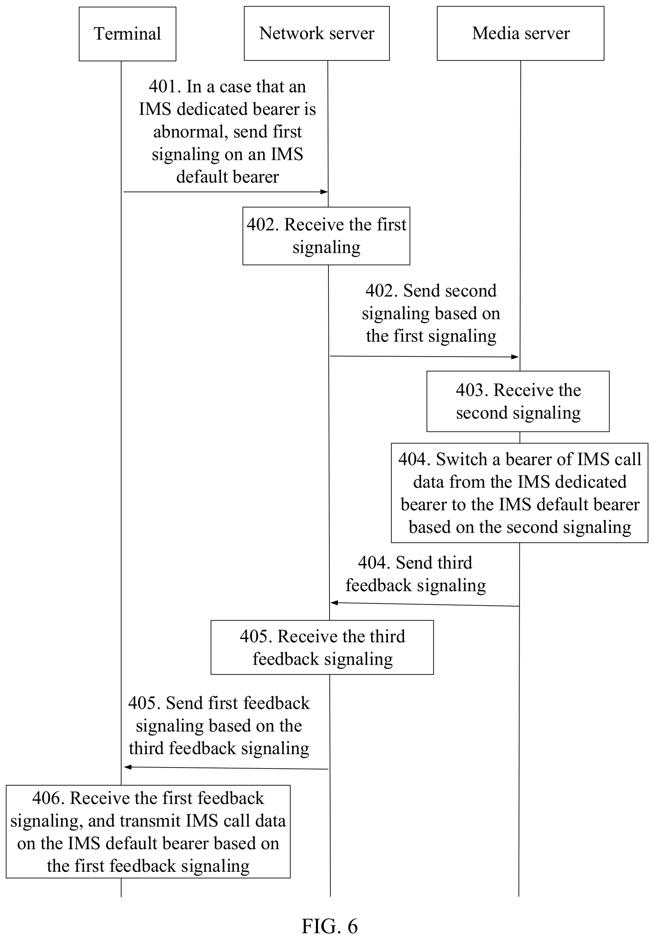

Based on the above communication system, some embodiments of this application further provide an IMS call establishment method. FIG. 6 is a flowchart of an interaction procedure of an IMS call establishment method according to some embodiments of this application. As shown in FIG. 6, the IMS call establishment method according to some embodiments of this application may include the following steps 401 to 406.

Step 401: In a case that an IMS dedicated bearer is abnormal, a terminal sends first signaling on an IMS default bearer to a network server.

Step 402: The network server receives the first signaling sent by the terminal and sends second signaling to a media server based on the first signaling.

Step 403: The media server receives the second signaling sent by the network server.

Step 404: The media server, based on the second signaling, switches the bearer of the IMS call data from the IMS dedicated bearer to the IMS default bearer and sends third feedback signaling to the network server.

Step 405: The network server receives the third feedback signaling sent by the media server and sends first feedback signaling to the terminal based on the third feedback signaling.

Step 406: The terminal receives the first feedback signaling sent by the network server and transmits the IMS call data on the IMS default bearer based on the first feedback signaling.

It should be noted that for the relevant descriptions of steps 401 to 406, reference is made to the descriptions in the above method embodiments, which are not repeated herein.

It can be understood that in a case that an IMS dedicated bearer is abnormal, the terminal sends the first signaling to notify the network server, enabling the network server to learn that the current IMS dedicated bearer is abnormal. The network server then sends third signaling to notify the media server to perform an IMS bearer switching operation. After switching the bearer, the media server sends third feedback signaling, that is, the feedback signaling for the third signaling, to the network server, enabling the network server to learn that the IMS bearer switching operation has been performed. Then, the network server sends first feedback signaling, that is, the feedback signaling for the first signaling, to the terminal, enabling the terminal to establish the call on the switched IMS bearer, that is, the IMS default bearer, to transmit the IMS call data.

In the IMS call establishment method according to some embodiments of this application, by adding a notification signaling procedure for detecting IMS dedicated bearer abnormalities between the terminal and the network server, when an IMS dedicated bearer abnormality occurs, the terminal promptly notifies the network server that the terminal has detected the abnormality in the dedicated bearer or that the bearer needs to be updated, and the network server can promptly notify the terminal to perform corresponding state switching; additionally, by adding a switching and recovery signaling procedure between the network server and the media server, the media server switches the IMS call data to another bearer for transmission. This enables the switching and recovery of the IMS bearer, and allows the IMS call data to be transmitted directly on another bearer when an IMS dedicated bearer abnormality occurs, avoiding voice problems caused by the IMS dedicated bearer abnormality, such as IMS call termination or delay, ensuring the continuity of IMS calls, and improving the smoothness of user calls.

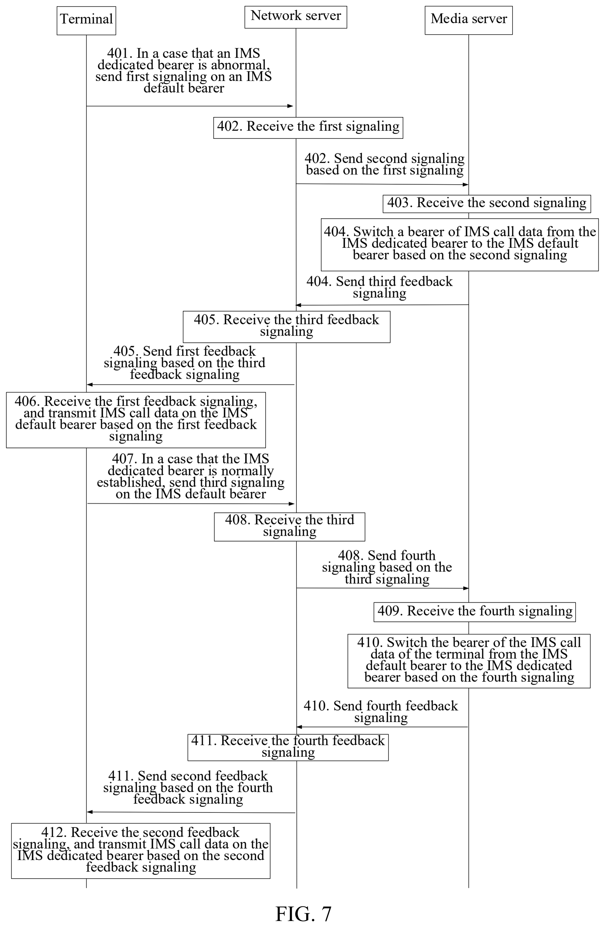

In some embodiments of this application, as shown in FIG. 7 in conjunction with FIG. 6, after step 406, the IMS call establishment method according to some embodiments of this application further includes the following steps 407 to 412.

Step 407: In a case that an IMS dedicated bearer is normally established, the terminal sends third signaling on the IMS default bearer to the network server.

Step 408: The network server receives the third signaling sent by the terminal and sends fourth signaling to the media server based on the third signaling.

Step 409: The media server receives the fourth signaling sent by the network server.

Step 410: The media server, based on the fourth signaling, switches the bearer of the IMS call data of the terminal from the IMS default bearer to the IMS dedicated bearer and sends fourth feedback signaling to the network server.

Step 411: The network server receives the fourth feedback signaling sent by the media server and sends second feedback signaling to the terminal based on the fourth feedback signaling.

Step 412: The terminal receives the second feedback signaling sent by the network server and transmits the IMS call data on the IMS dedicated bearer based on the second feedback signaling.

It should be noted that for the relevant descriptions and beneficial effects of steps 407 to 412, reference is made to the descriptions in the above method embodiments, which are not repeated herein.

Based on the above communication system, the following describes the interaction procedure among the terminal, the network server, and the media server in the IMS call establishment method according to some embodiments of this application in conjunction with specific application scenarios, where the terminal includes a sending (MO) terminal and a receiving (MT) terminal.

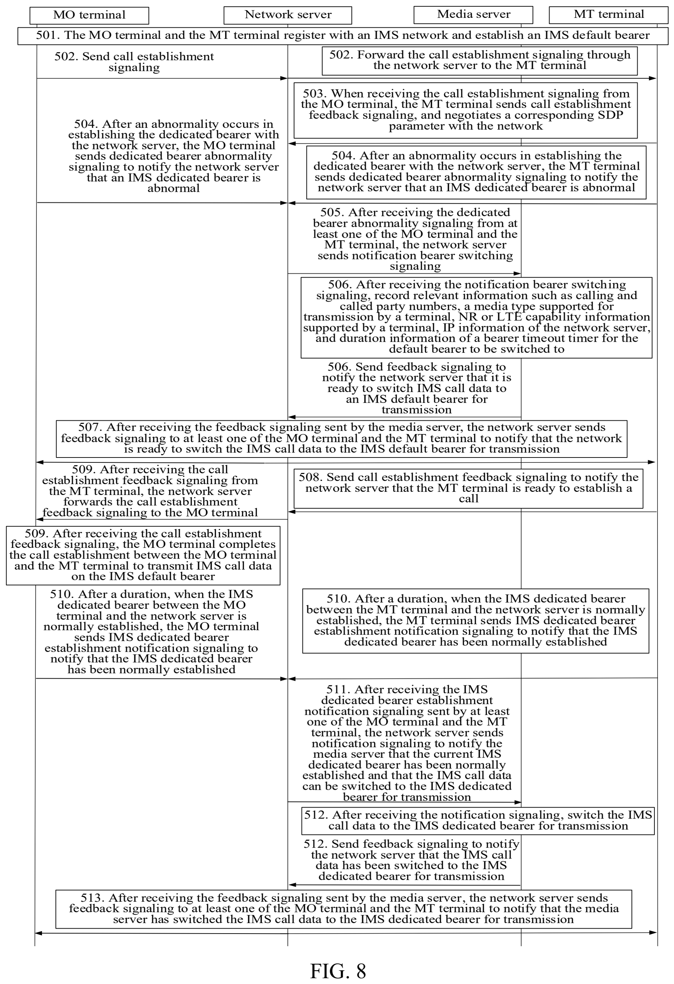

In some embodiments of this application, for the case that the IMS dedicated bearer is abnormal during initiation of the IMS call procedure, that is, during IMS call establishment, as shown in FIG. 8, the IMS call establishment method according to some embodiments of this application may include the following steps 501 to 513.

Step 501: The MO terminal and the MT terminal register with an IMS network and establish an IMS default bearer.

Step 502: The MO terminal sends call establishment signaling to the network server, and forwards the call establishment signaling through network server to the MT terminal.

At this time, an abnormality occurs in establishing the IMS dedicated bearer between the MO terminal and the network server, such as a delay or failure in establishing the IMS dedicated bearer.

Step 503: When receiving the call establishment signaling from the MO terminal, the MT terminal sends call establishment feedback signaling to the network server and negotiates a corresponding SDP parameter with the network.

At this time, an abnormality occurs in establishing the IMS dedicated bearer between the MT terminal and the network server.

Step 504: After an abnormality occurs in establishing the dedicated bearer between at least one of the MO terminal and the MT terminal and the network server, a dedicated bearer abnormality signaling is sent to the network server to notify the network server that the IMS dedicated bearer is abnormal.

It should be noted that this is the additional signaling 1 introduced in this solution, that is, the aforementioned first signaling. The signaling 1 is a signaling interaction between the terminal and the network server, and its role is to notify the network server that the IMS dedicated bearer is abnormal. For the relevant description of signaling 1, reference may be made to the description in the above embodiments, which is not repeated herein.

Step 505: After receiving the dedicated bearer abnormality signaling from at least one of the MO terminal and the MT terminal, the network server sends a notification bearer switching signaling to the media server.

The notification bearer switching signaling is used to notify the media server that the current IMS dedicated bearer is abnormal, and after establishing the IMS call, the IMS call data is switched to the IMS default bearer for transmission. The IMS call data herein may be audio data packets.

It should be noted that this is the additional signaling 2 introduced in this solution, that is, the aforementioned second signaling. The signaling 2 is a signaling interaction between the network server and the media server, and its role is to notify the media server to switch the bearer for transmitting IMS call data and to update the network. For the relevant description of signaling 2, reference may be made to the description in the above embodiments, which is not repeated herein.

Step 506: After receiving the notification bearer switching signaling sent by the network server, the media server records relevant information such as the calling and called party numbers, a media type supported for transmission by the terminal, NR or LTE capability information supported by the terminal, IP information of the network server, and duration information of the bearer timeout timer for the default bearer to be switched to, and sends feedback signaling to the network server to notify the network server that it is ready to switch the IMS call data to the IMS default bearer for transmission.

It should be noted that the feedback signaling of the media server herein is the feedback signaling for the aforementioned signaling 2 in this solution, that is, the aforementioned third feedback signaling. For the relevant description of this feedback signaling, reference may be made to the description in the above embodiments, which is not repeated herein.

Step 507: After receiving the feedback signaling sent by the media server, the network server sends feedback signaling to at least one of the MO terminal and the MT terminal to notify that the network is ready to switch the IMS call data to the IMS default bearer for transmission.

It should be noted that the feedback signaling herein is the feedback signaling for the aforementioned signaling 1 in this solution, that is, the aforementioned first feedback signaling. For the relevant description of this feedback signaling, reference may be made to the description in the above embodiments, which is not repeated herein.

Step 508: The MT terminal sends call establishment feedback signaling to the network server to notify the network server that the MT terminal is ready to establish the call.

Step 509: After receiving the call establishment feedback signaling from the MT terminal, the network server forwards the call establishment feedback signaling to the MO terminal. After receiving the call establishment feedback signaling, the MO terminal completes the call establishment between the MO terminal and the MT terminal to transmit the IMS call data on the IMS default bearer.

Step 510: After a duration, the IMS dedicated bearer between at least one of the MO terminal and the MT terminal and the network server is normally established, and at this point, at least one of the MO terminal and the MT terminal sends IMS dedicated bearer establishment notification signaling to the network server to notify that the IMS dedicated bearer has been normally established.

It should be noted that the IMS dedicated bearer establishment notification signaling herein is the aforementioned third signaling in this solution. For the relevant description of this notification signaling, reference may be made to the description in the above embodiments, which is not repeated herein.

Step 511: After receiving the IMS dedicated bearer establishment notification signaling sent by at least one of the MO terminal and the MT terminal, the network server sends notification signaling to the media server to notify the media server that the current IMS dedicated bearer has been normally established and that the IMS call data can be switched to the IMS dedicated bearer for transmission.

It should be noted that the notification signaling herein is the aforementioned fourth signaling in this solution. For the relevant description of this notification signaling, reference may be made to the description in the above embodiments, which is not repeated herein.

Step 512: After receiving the notification signaling, the media server switches the IMS call data to the IMS dedicated bearer for transmission and then sends feedback signaling to the network server to notify the network server that the IMS call data has been switched to the IMS dedicated bearer for transmission.

It should be noted that the feedback signaling herein is the feedback signaling of the media server, which is the feedback signaling for the aforementioned fourth signaling in this solution, that is, the aforementioned fourth feedback signaling. For the relevant description of this feedback signaling, reference may be made to the description in the above embodiments, which is not repeated herein.

Step 513: After receiving the feedback signaling sent by the media server, the network server sends feedback signaling to at least one of the MO terminal and the MT terminal to notify that the media server has switched the IMS call data to the IMS dedicated bearer for transmission.

At this point, the switching from the IMS default bearer to the IMS dedicated bearer is completed, ensuring the continuity of the IMS call.

It should be noted that the feedback signaling sent to at least one of the MO terminal and the MT terminal herein is the aforementioned second feedback signaling in this solution. For the relevant description of this feedback signaling, reference may be made to the description in the above embodiments, which is not repeated herein.

With this solution, when an IMS dedicated bearer abnormality is detected during initiation of an IMS call, the terminal may notify the network server that the IMS dedicated bearer is abnormal, enabling the network server to learn that the dedicated bearer for the IMS call is abnormal, thereby notifying the media server to promptly switch the bearer of the IMS call data from the IMS dedicated bearer to the IMS default bearer, enabling the terminal to continue transmitting the IMS call data on the IMS default bearer when completing the establishment of the IMS call, implementing direct switching of the IMS call bearer, and ensuring the continuity of the IMS call.

Furthermore, in a case that the IMS dedicated bearer is normally established, the terminal can promptly send signaling to the network server to notify that the IMS dedicated bearer has been normally established, causing the network server to promptly notify the media server to switch the bearer of the IMS call data from the IMS default bearer to the IMS dedicated bearer, and enabling the terminal to continue transmitting the IMS call data on the IMS dedicated bearer. This enables the switching and recovery of the IMS bearer, and allows switching to the IMS dedicated bearer, that better meets specific QoS transmission requirements, for transmission when the IMS dedicated bearer is restored to normal, ensuring the continuity and quality of the IMS call.

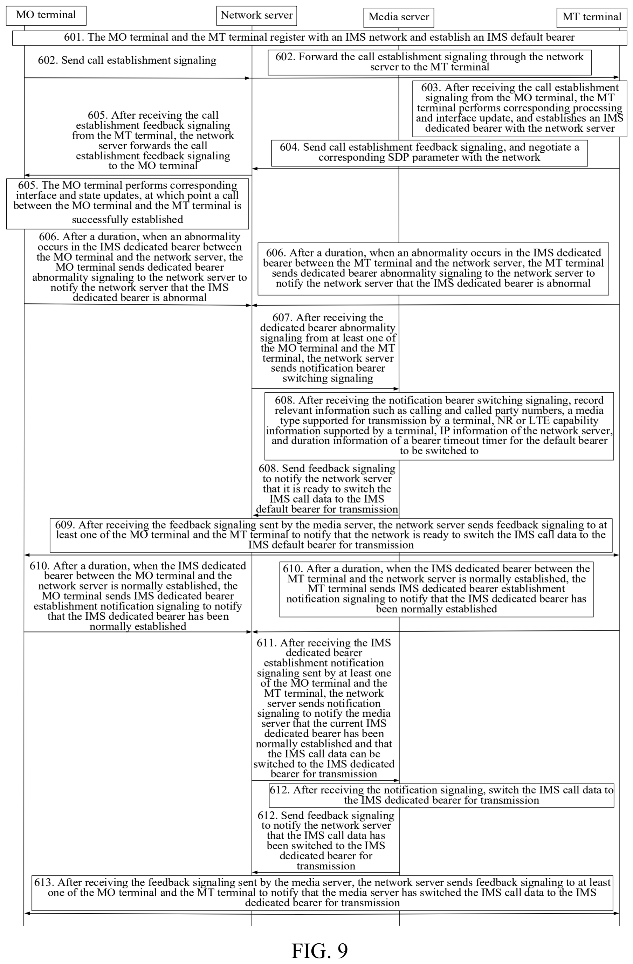

In some embodiments of this application, for the case that the IMS dedicated bearer is abnormal during the IMS call procedure, that is, after the IMS call is successfully established, as shown in FIG. 9, the IMS call establishment method according to some embodiments of this application may include the following steps 601 to 613.

Step 601: The MO terminal and the MT terminal register with an IMS network and establish an IMS default bearer.

Step 602: The MO terminal sends call establishment signaling to a network server, and forwards the call establishment signaling through the network server to the MT terminal.

At this point, the MO terminal needs to establish an IMS dedicated bearer with the network server.

For example, the call establishment signaling herein may be an INVITE message.

Step 603: After receiving the call establishment signaling of the MO terminal sent by the network server, the MT terminal performs corresponding processing and interface update and establishes an IMS dedicated bearer with the network server.

Step 604: The MT terminal sends call establishment feedback signaling to the network server and negotiates a corresponding SDP parameter with the network.

Step 605: After receiving the call establishment feedback signaling from the MT terminal, the network server forwards the call establishment feedback signaling to the MO terminal, and the MO terminal performs corresponding interface and state updates, at which point the call between the MO terminal and the MT terminal is successfully established.

Step 606: After a duration, an abnormality occurs in the IMS dedicated bearer between at least one of the MO terminal and the MT terminal and the network server, and at least one of the MO terminal and the MT terminal sends a dedicated bearer abnormality signaling to the network server to notify the network server that the IMS dedicated bearer is abnormal.

It should be noted that this is the additional signaling 1 introduced in this solution, that is, the aforementioned first signaling. The signaling 1 is a signaling interaction between the terminal and the network server, and its role is to notify the network server that the IMS dedicated bearer is abnormal. For the relevant description of signaling 1, reference may be made to the description in the above embodiments, which is not repeated herein.

Steps 607 to 609 are the same as steps 505 to 507 above. For specific details, reference may be made to the description in the above embodiments, which is not repeated herein.

It should be noted that in this solution, for the case that an IMS dedicated bearer abnormality occurs during the IMS call procedure, that is, the IMS call has already been successfully established through steps 601 to 605, after executing step 609, the terminal may continue to transmit the IMS call data on the IMS default bearer without needing to execute steps 508 and 509 of the first embodiment to complete the establishment of the IMS call.

Steps 610 to 613 are the same as steps 510 to 513 above. For specific details, reference may be made to the description in the above embodiments, which is not repeated herein.

With this solution, when an IMS dedicated bearer abnormality is detected during the IMS call procedure, the terminal may notify the network server that the IMS dedicated bearer is abnormal, enabling the network server to learn that the dedicated bearer for the IMS call is abnormal, thereby notifying the media server to promptly switch the bearer of the IMS call data from the IMS dedicated bearer to the IMS default bearer, enabling the terminal to continue transmitting the IMS call data on the IMS default bearer, implementing direct switching of the IMS call bearer, and ensuring the continuity of the IMS call.

Furthermore, in a case that the IMS dedicated bearer is normally established, the terminal can promptly send signaling to the network server to notify that the IMS dedicated bearer has been normally established, causing the network server to promptly notify the media server to switch the bearer of the IMS call data from the IMS default bearer to the IMS dedicated bearer, and enabling the terminal to continue transmitting the IMS call data on the IMS dedicated bearer. This enables the switching and recovery of the IMS bearer, and allows switching to the IMS dedicated bearer, that better meets specific QoS transmission requirements, for transmission when the IMS dedicated bearer is restored to normal, ensuring the continuity and quality of the IMS call.

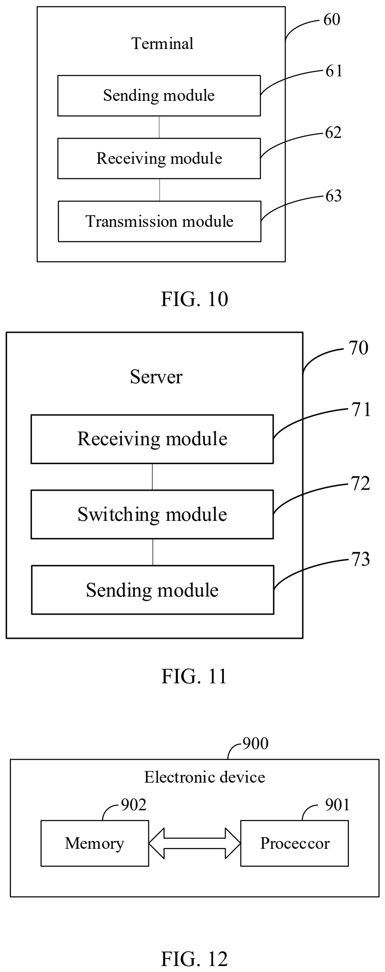

FIG. 10 is a schematic diagram of a possible structure of a terminal according to some embodiments of this application. As shown in FIG. 10, the terminal 60 may include: a sending module 61, a receiving module 62, and a transmission module 63.

The sending module 61 is configured to, in a case that an IMS dedicated bearer is abnormal, send first signaling on an IMS default bearer to a network server, where the first signaling is used to notify that the IMS dedicated bearer is abnormal and to instruct the network server to send second signaling to a media server, and the second signaling is used to notify the media server that the IMS dedicated bearer is abnormal and to instruct the media server to switch a bearer of IMS call data of the terminal. The receiving module 62 is configured to receive first feedback signaling sent by the network server, where the first feedback signaling is used to notify that the media server has switched the bearer of the IMS call data from the IMS dedicated bearer to the IMS default bearer. The transmission module 63 is configured to transmit the IMS call data on the IMS default bearer based on the first feedback signaling received by the receiving module 62.

Some embodiments of this application provide a terminal. In a case that an IMS dedicated bearer is abnormal, the terminal can promptly send signaling to the network server to notify that the IMS dedicated bearer is abnormal, causing the network server to promptly notify the media server to perform a bearer switching operation for the IMS call data. After the media server switches the bearer of the IMS call data from the IMS dedicated bearer to the IMS default bearer, it provides feedback on a bearer switching result to the terminal, enabling the terminal to transmit the IMS call data on the IMS default bearer. This enables the switching and recovery of the IMS bearer, and allows the IMS call data to be transmitted directly on another bearer when an IMS dedicated bearer abnormality occurs, avoiding voice problems caused by the IMS dedicated bearer abnormality, such as IMS call termination or delay, ensuring the continuity of IMS calls, and improving the smoothness of user calls.

In a possible implementation, the sending module 61 is specifically configured to send a SIP message to the network server on the IMS default bearer. The SIP message is in the form of INVITE signaling, in the form of UPDATE signaling, or in the form of NOTIFY signaling.

In a possible implementation, the SIP message includes at least one of the following: calling and called party numbers, a media type supported for transmission by the terminal, network capability information supported by the terminal, IP information of the terminal, and cause information for IMS dedicated bearer abnormality.

In a possible implementation, the sending module 61 is further configured to, after the transmission module 63 transmits the IMS call data on the IMS default bearer based on the first feedback signaling, in a case that the IMS dedicated bearer is normally established, send third signaling on the IMS default bearer to the network server, where the third signaling is used to notify that the IMS dedicated bearer has been normally established. The receiving module 62 is further configured to receive second feedback signaling sent by the network server, where the second feedback signaling is used to notify that the media server has switched the bearer of the IMS call data from the IMS default bearer to the IMS dedicated bearer. The transmission module 63 is further configured to transmit the IMS call data on the IMS dedicated bearer based on the second feedback signaling received by the receiving module 62.

In a possible implementation, the sending module 61 is specifically configured to, in the case that the IMS dedicated bearer is abnormal during initiation of an IMS call, send first signaling on the IMS default bearer to the network server. Alternatively, the sending module 61 is specifically configured to, in the case that the IMS dedicated bearer is abnormal during an IMS call procedure, send first signaling on the IMS default bearer to the network server.

In some embodiments of this application, the IMS call establishment apparatus may be a terminal or a component in a terminal, such as an integrated circuit or chip. For example, the terminal may be a mobile phone, a tablet computer, a notebook computer, a palmtop computer, a vehicle-mounted electronic device, a mobile internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, or a personal digital assistant (personal digital assistant, PDA), or may be a server, a network attached storage (Network Attached Storage, NAS), a personal computer (personal computer, PC), a television (television, TV), a teller machine, a self-service machine, or the like. This is not specifically limited in some embodiments of this application.

The terminal in some embodiments of this application may be a terminal with an operating system. The operating system may be an Android (Android) operating system, iOS operating system, or other possible operating systems. This is not specifically limited in some embodiments of this application.

The terminal provided in some embodiments of this application can implement the processes implemented by the foregoing method embodiment. To avoid repetition, details are not repeated herein.

FIG. 11 is a schematic diagram of a possible structure of a server according to some embodiments of this application. As shown in FIG. 11, the server 70 may include a receiving module 71, a switching module 72, and a sending module 73.

The receiving module 71 is configured to receive second signaling sent by a network server, where the second signaling is used to notify a media server that an IMS dedicated bearer is abnormal and to instruct the media server to switch a bearer of IMS call data of a terminal, the second signaling is generated based on first signaling received by the network server from the terminal, and the first signaling is used to notify that the IMS dedicated bearer is abnormal and to instruct the network server to send the second signaling to the media server. The switching module 72 is configured to switch the bearer of the IMS call data from the IMS dedicated bearer to the IMS default bearer based on the second signaling received by the receiving module 71. The sending module 73 is configured to send third feedback signaling to the network server, where the third feedback signaling is used to notify the network server that the bearer of the IMS call data has been switched from the IMS dedicated bearer to the IMS default bearer.

Some embodiments of this application provide a server. The media server can, based on the second signaling sent by the network server, learn that the IMS dedicated bearer is abnormal, thereby promptly switching the bearer of the IMS call data from the IMS dedicated bearer to the IMS default bearer and sending a bearer switching result to the network server, enabling the terminal to transmit the IMS call data on the IMS default bearer. By adding a switching and recovery signaling procedure between the network server and the media server, the media server switches the IMS call data to another bearer for transmission, enabling the switching and recovery of the IMS bearer, allowing the IMS call data to be transmitted directly on another bearer when an IMS dedicated bearer abnormality occurs, avoiding voice problems caused by the IMS dedicated bearer abnormality, such as IMS call termination or delay, ensuring the continuity of IMS calls, and improving the smoothness of user calls.

In a possible implementation, the receiving module 71 is specifically configured to receive a SIP message or request-response signaling sent by the network server, where the SIP message is in the form of INVITE signaling.

In a possible implementation, the SIP message includes at least one of the following: calling and called party numbers, a media type supported for transmission by the terminal, network capability information supported by the terminal, IP information of the network server, and duration information of a bearer timeout timer. The duration information represents a timing for the media server to send a NOTIFY message to the network server, where the NOTIFY message is used to inquire whether the network server continues to maintain the current bearer.

In a possible implementation, the receiving module 71 is further configured to, after the sending module 73 sends the third feedback signaling to the network server, receive fourth signaling sent by the network server, where the fourth signaling is used to notify the media server that the IMS dedicated bearer has been normally established and to instruct the media server to switch the bearer of the IMS call data of the terminal. The switching module 72 is further configured to switch the bearer of the IMS call data of the terminal from the IMS default bearer to the IMS dedicated bearer based on the fourth signaling received by the receiving module 71. The sending module 73 is further configured to send fourth feedback signaling to the network server, where the fourth feedback signaling is used to notify the network server that the bearer of the IMS call data has been switched from the IMS default bearer to the IMS dedicated bearer.

In a possible implementation, the receiving module 71 is specifically configured to receive a SIP message or request-response signaling sent by the network server, where the SIP message is in the form of CANCEL signaling.

The server according to some embodiments of this application can implement the various processes implemented by the media server in the above method embodiments. To avoid repetition, details are not repeated herein.

Optionally, as shown in FIG. 12, some embodiments of this application further provide an electronic device 900, including a processor 901 and a memory 902, where the memory 902 stores a program or instructions executable on the processor 901, and when the program or the instructions are executed by the processor 901, the steps of the method embodiments described above are implemented, with the same technical effects achieved. To avoid repetition, details are not repeated herein.

It should be noted that the electronic device in some embodiments of this application includes the mobile electronic devices and non-mobile electronic devices described above.

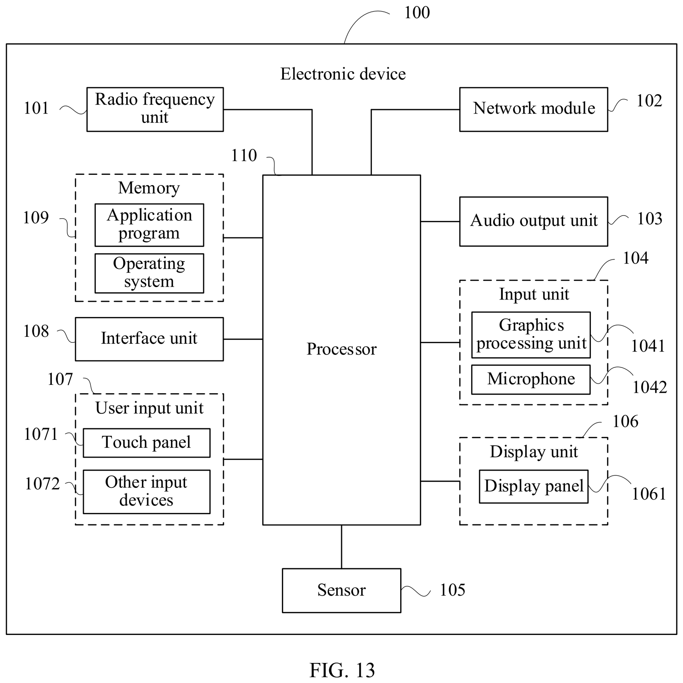

FIG. 13 is a schematic diagram of a hardware structure of an electronic device implementing some embodiments of this application.

The electronic device 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

Those skilled in the art can understand that the electronic device 100 may further include a power supply (for example, a battery) that supplies power to various components. The power supply may be logically connected to the processor 110 through a power management system, so that functions such as charge and discharge management and power consumption management are implemented by using the power management system. The structure of the electronic device shown in FIG. 13 does not constitute a limitation on the electronic device. The electronic device may include more or fewer components than those shown in the figure, or some components may be combined, or there may be a different component layout. Details are not repeated herein.

In some embodiments of this application, the electronic device may be a terminal or a device other than a terminal.

The radio frequency unit 101 is configured to:
in a case that an IMS dedicated bearer is abnormal, send first signaling on an IMS default bearer to a network server, where the first signaling is used to notify that the IMS dedicated bearer is abnormal and to instruct the network server to send second signaling to a media server, and the second signaling is used to notify the media server that the IMS dedicated bearer is abnormal and to instruct the media server to switch a bearer of IMS call data of the terminal; receive first feedback signaling sent by the network server, where the first feedback signaling is used to notify that the media server has switched the bearer of the IMS call data from the IMS dedicated bearer to the IMS default bearer; and transmit the IMS call data on the IMS default bearer based on the first feedback signaling.

Some embodiments of this application provide an electronic device. In a case that an IMS dedicated bearer is abnormal, the electronic device can promptly send signaling to the network server to notify that the IMS dedicated bearer is abnormal, causing the network server to promptly notify the media server to perform a bearer switching operation for the IMS call data. After the media server switches the bearer of the IMS call data from the IMS dedicated bearer to the IMS default bearer, it provides feedback on a bearer switching result to the electronic device, enabling the electronic device to transmit the IMS call data on the IMS default bearer. This enables the switching and recovery of the IMS bearer, and allows the IMS call data to be transmitted directly on another bearer when an IMS dedicated bearer abnormality occurs, avoiding voice problems caused by the IMS dedicated bearer abnormality, such as IMS call termination or delay, ensuring the continuity of IMS calls, and improving the smoothness of user calls.

Optionally, the radio frequency unit 101 is specifically configured to send a SIP message to the network server on the IMS default bearer, where the SIP message is in the form of INVITE signaling, in the form of UPDATE signaling, or in the form of NOTIFY signaling.

Optionally, the SIP message includes at least one of the following: calling and called party numbers, a media type supported for transmission by the terminal, network capability information supported by the terminal, IP information of the terminal, and cause information for IMS dedicated bearer abnormality.

Optionally, the radio frequency unit 101 is further configured to: after transmitting the IMS call data on the IMS default bearer based on the first feedback signaling, in a case that the IMS dedicated bearer is normally established, send third signaling on the IMS default bearer to the network server, where the third signaling is used to notify that the IMS dedicated bearer has been normally established; receive second feedback signaling sent by the network server, where the second feedback signaling is used to notify that the media server has switched the bearer of the IMS call data from the IMS default bearer to the IMS dedicated bearer; and transmit the IMS call data on the IMS dedicated bearer based on the received second feedback signaling.

Optionally, the radio frequency unit 101 is specifically configured to, in the case that the IMS dedicated bearer is abnormal during initiation of an IMS call, send first signaling on the IMS default bearer to the network server. Alternatively, the radio frequency unit 101 is specifically configured to, in the case that the IMS dedicated bearer is abnormal during an IMS call procedure, send first signaling on the IMS default bearer to the network server.

The electronic device according to some embodiments of this application can implement various processes implemented by the above method embodiments, with the same technical effects achieved. To avoid repetition, details are not repeated herein.

The beneficial effects of various implementations in this embodiment can be specifically referred to the beneficial effects of the corresponding implementations in the above method embodiments. To avoid repetition, details are not repeated herein.

It should be understood that in some embodiments of this application, the input unit 104 may include a graphics processing unit (Graphics Processing Unit, GPU) 1041 and a microphone 1042. The GPU 10041 processes image data of a static picture or a video that is obtained by an image capture apparatus (for example, a camera) in a video capture mode or an image capture mode. The display unit 106 may include a display panel 1061, and the display panel 1061 may be configured in a form of a liquid crystal display, an organic light-emitting diode, and the like. The user input unit 107 includes at least one of a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a function key (for example, a volume control key or a power on/off key), a trackball, a mouse, a joystick, and the like. Details are not described herein.

The memory 109 may be configured to store software programs and various data. The memory 109 may include first storage area for storing programs or instructions and a second storage area for storing data. The first storage area may store an operating system, an application program or instruction required by at least one function (for example, a sound playback function or an image playback function), and the like. In addition, the memory 109 may include either a volatile memory or a non-volatile memory, or the memory 109 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 109 in some embodiments of this application includes but is not limited to these and any other suitable types of memories.

The processor 110 may include one or more processing units. Optionally, an application processor and a modem processor are integrated in the processor 110. The application processor primarily processes operations relating to an operating system, user interfaces, application programs, and the like. The modem processor primarily processes radio communication signals, for example, being a baseband processor. It can be understood that the modem processor may alternatively be not integrated in the processor 110.

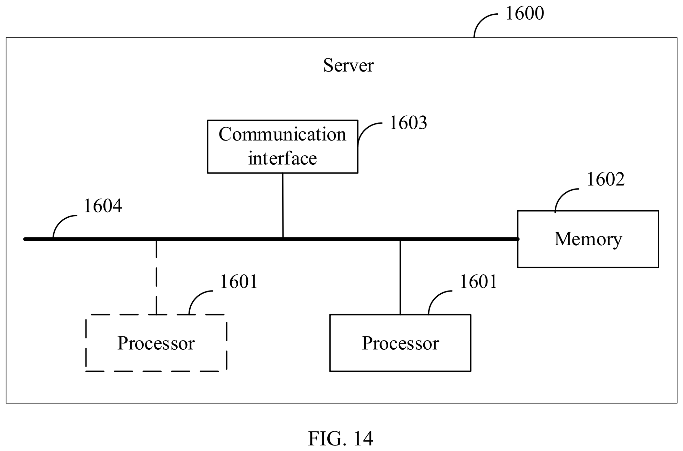

FIG. 14 is a schematic diagram of a hardware structure of a server according to some embodiments of this application. The server may be the media server described above. As shown in FIG. 14, the server 1600 may include: one or more processors 1601, a memory 1602, a communication interface 1603, and a bus 1604.

The processor 1601 is configured to receive, through the bus 1604 and the communication interface 1603, second signaling sent by a network server, where the second signaling is used to notify a media server that an IMS dedicated bearer is abnormal and to instruct the media server to switch a bearer of IMS call data of a terminal, the second signaling is generated based on first signaling received by the network server from the terminal, and the first signaling is used to notify that the IMS dedicated bearer is abnormal and to instruct the network server to send the second signaling to the media server; and based on the second signaling, switch the bearer of the IMS call data from the IMS dedicated bearer to an IMS default bearer, and send, through the bus 1604 and the communication interface 1603, third feedback signaling to the network server, where the third feedback signaling is used to notify the network server that the bearer of the IMS call data has been switched from the IMS dedicated bearer to the IMS default bearer.

Optionally, the processor 1601 is specifically configured to receive, through the bus 1604 and the communication interface 1603, a SIP message or request-response signaling sent by the network server, where the SIP message is in the form of INVITE signaling.

Optionally, the SIP message includes at least one of the following: calling and called party numbers, a media type supported for transmission by the terminal, network capability information supported by the terminal, IP information of the network server, and duration information of a bearer timeout timer. The duration information represents a timing for the media server to send a NOTIFY message to the network server, where the NOTIFY message is used to inquire whether the network server continues to maintain the current bearer.

Optionally, the processor 1601 is further configured to, after sending the third feedback signaling to the network server through the bus 1604 and the communication interface 1603, receive fourth signaling sent by the network server, where the fourth signaling is used to notify the media server that the IMS dedicated bearer has been normally established and to instruct the media server to switch the bearer of the IMS call data of the terminal; and, based on the fourth signaling, switch the bearer of the IMS call data of the terminal from the IMS default bearer to the IMS dedicated bearer, and send, through the bus 1604 and the communication interface 1603, fourth feedback signaling to the network server, where the fourth feedback signaling is used to notify the network server that the bearer of the IMS call data has been switched from the IMS default bearer to the IMS dedicated bearer.

Optionally, the processor 1601 is specifically configured to receive, through the bus 1604 and the communication interface 1603, a SIP message or request-response signaling sent by the network server, where the SIP message is in the form of CANCEL signaling.

The server according to some embodiments of this application can implement various processes implemented by the above method embodiments, with the same technical effects achieved. To avoid repetition, details are not repeated herein.

The beneficial effects of various implementations in this embodiment can be specifically referred to the beneficial effects of the corresponding implementations in the above method embodiments. To avoid repetition, details are not repeated herein.

In some embodiments of this application, one or more processors 1601, a memory 1602, and a communication interface 1603 are interconnected through a bus 1604. The bus 1604 may be a peripheral component interconnect (Peripheral Component Interconnect, PCI) bus or an extended industry standard architecture (Extended Industry Standard Architecture, EISA) bus, and the like. The bus 1604 may be divided into an address bus, a data bus, a control bus, or the like. For ease of representation, only one thick line is used in FIG. 14 to represent the bus, but this does not mean there is only one bus or one type of bus. Additionally, the server 1600 may include some functional modules not shown, which are not repeated herein.

Optionally, some embodiments of this application further provide a server, including the processor 1601 shown in FIG. 14, a memory 1602, and a computer program stored in the memory 1602 and executable on the processor 1601, where when the computer program is executed by the processor 1601, various processes of the above method embodiments are implemented, with the same technical effects achieved. To avoid repetition, details are not repeated herein.

Some embodiments of this application further provide a readable storage medium, where the readable storage medium stores a program or instructions, and when the program or the instructions are executed by a processor, various processes of the above method embodiments are implemented, with the same technical effects achieved. To avoid repetition, details are not repeated herein.

The processor is the processor in the electronic device or server described in the above embodiments. The readable storage medium includes a computer-readable storage medium, such as a computer read-only memory ROM, a random access memory RAM, a magnetic disk, or an optical disk.

Some embodiments of this application further provide a chip, including a processor and a communication interface, where the communication interface is coupled to the processor, and the processor is configured to execute a program or instructions to implement various processes of the above method embodiments, with the same technical effects achieved. To avoid repetition, details are not repeated herein.

It should be understood that the chip mentioned in some embodiments of this application may also be referred to as a system-on-chip, a system chip, a chip system, a system-on-chip chip, and the like.

Some embodiments of this application provide a computer program product, where the program product is stored in a storage medium, and the program product is executed by at least one processor to implement various processes of the above method embodiments, with the same technical effects achieved. To avoid repetition, details are not repeated herein.

Some embodiments of this application further provide a communication system, including a terminal and a server, where the terminal is configured to execute the steps of the IMS call establishment method as described above, and the server is configured to execute the steps of the IMS call establishment method as described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a ..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An internet protocol multimedia subsystem (IMS) call establishment method, comprising:
in a case that an IMS dedicated bearer is abnormal, sending, by a terminal, first signaling on an IMS default bearer to a network server, wherein the first signaling is used to notify that the IMS dedicated bearer is abnormal and to instruct the network server to send second signaling to a media server, and the second signaling is used to notify the media server that the IMS dedicated bearer is abnormal and to instruct the media server to switch a bearer of IMS call data of the terminal;
receiving, by the terminal, first feedback signaling sent by the network server, wherein the first feedback signaling is used to notify that the media server has switched the bearer of the IMS call data from the IMS dedicated bearer to the IMS default bearer; and
transmitting, by the terminal, the IMS call data on the IMS default bearer based on the first feedback signaling.

2. The method according to claim 1, wherein the sending, by a terminal, first signaling on an IMS default bearer to a network server comprises:
sending, by the terminal, a session initiation protocol (SIP) message to the network server on the IMS default bearer; wherein
the SIP message is in a form of INVITE signaling, in a form of UPDATE signaling, or in a form of NOTIFY signaling.

3. The method according to claim 2, wherein the SIP message comprises at least one of the following: calling and called party numbers, a media type supported for transmission by the terminal, network capability information supported by the terminal, internet protocol (IP) information of the terminal, and cause information for IMS dedicated bearer abnormality.

4. The method according to claim 1, wherein after the transmitting, by the terminal, the IMS call data on the IMS default bearer based on the first feedback signaling, the method further comprises:
in a case that the IMS dedicated bearer is normally established, sending, by the terminal, third signaling on the IMS default bearer to the network server, wherein the third signaling is used to notify that the IMS dedicated bearer has been normally established;
receiving, by the terminal, second feedback signaling sent by the network server, wherein the second feedback signaling is used to notify that the media server has switched the bearer of the IMS call data from the IMS default bearer to the IMS dedicated bearer; and
transmitting, by the terminal, the IMS call data on the IMS dedicated bearer based on the second feedback signaling.

5. The method according to claim 1, wherein in a case that the IMS dedicated bearer is abnormal, the sending, by a terminal, first signaling on an IMS default bearer to a network server comprises:
in the case that the IMS dedicated bearer is abnormal during initiation of an IMS call, sending, by the terminal, the first signaling on the IMS default bearer to the network server; or
in the case that the IMS dedicated bearer is abnormal during an IMS call procedure, sending, by the terminal, the first signaling on the IMS default bearer to the network server.

6. An internet protocol multimedia subsystem (IMS) call establishment method, comprising:
receiving, by a media server, second signaling sent by a network server, wherein the second signaling is used to notify the media server that an IMS dedicated bearer is abnormal and to instruct the media server to switch a bearer of IMS call data of a terminal, the second signaling is generated based on first signaling received by the network server from the terminal, and the first signaling is used to notify that the IMS dedicated bearer is abnormal and to instruct the network server to send the second signaling to the media server; and
based on the second signaling, switching, by the media server, the bearer of the IMS call data from the IMS dedicated bearer to an IMS default bearer, and sending third feedback signaling to the network server, wherein the third feedback signaling is used to notify the network server that the bearer of the IMS call data has been switched from the IMS dedicated bearer to the IMS default bearer.

7. The method according to claim 6, wherein the receiving, by a media server, second signaling sent by a network server comprises:
receiving, by the media server, a session initiation protocol (SIP) message or request-response signaling sent by the network server, wherein the SIP message is in a form of INVITE signaling.

8. The method according to claim 7, wherein the SIP message comprises at least one of the following: calling and called party numbers, a media type supported for transmission by the terminal, network capability information supported by the terminal, internet protocol (IP) information of the network server, and duration information of a bearer timeout timer; wherein
the duration information represents a timing for the media server to send a NOTIFY message to the network server, wherein the NOTIFY message is used to inquire whether the network server continues to maintain a current bearer.

9. The method according to claim 6, wherein after the sending third feedback signaling to the network server, the method further comprises:
receiving, by the media server, fourth signaling sent by the network server, wherein the fourth signaling is used to notify the media server that the IMS dedicated bearer has been normally established and to instruct the media server to switch the bearer of the IMS call data of the terminal; and
based on the fourth signaling, switching, by the media server, the bearer of the IMS call data of the terminal from the IMS default bearer to the IMS dedicated bearer, and sending fourth feedback signaling to the network server, wherein the fourth feedback signaling is used to notify the network server that the bearer of the IMS call data has been switched from the IMS default bearer to the IMS dedicated bearer.

10. The method according to claim 9, wherein the receiving, by the media server, fourth signaling sent by the network server comprises:
receiving, by the media server, a session initiation protocol (SIP) message or request-response signaling sent by the network server, wherein the SIP message is in a form of CANCEL signaling.

11. A terminal, comprising:
a sending module configured to, in a case that an internet protocol multimedia subsystem (IMS) dedicated bearer is abnormal, send first signaling on an IMS default bearer to a network server, wherein the first signaling is used to notify that the IMS dedicated bearer is abnormal and to instruct the network server to send second signaling to a media server, and the second signaling is used to notify the media server that the IMS dedicated bearer is abnormal and to instruct the media server to switch a bearer of IMS call data of the terminal;
a receiving module configured to receive first feedback signaling sent by the network server, wherein the first feedback signaling is used to notify that the media server has switched the bearer of the IMS call data from the IMS dedicated bearer to the IMS default bearer; and
a transmission module configured to transmit the IMS call data on the IMS default bearer based on the first feedback signaling received by the receiving module.

12. The terminal according to claim 11, wherein the sending module is specifically configured to send a session initiation protocol (SIP) message to the network server on the IMS default bearer; wherein
the SIP message is in a form of INVITE signaling, in a form of UPDATE signaling, or in a form of NOTIFY signaling.

13. The terminal according to claim 12, wherein the SIP message comprises at least one of the following: calling and called party numbers, a media type supported for transmission by the terminal, network capability information supported by the terminal, internet protocol (IP) information of the terminal, and cause information for IMS dedicated bearer abnormality.

14. The terminal according to claim 11, wherein the sending module is further configured to, after the transmission module transmits the IMS call data on the IMS default bearer based on the first feedback signaling, in a case that the IMS dedicated bearer is normally established, send third signaling on the IMS default bearer to the network server, wherein the third signaling is used to notify that the IMS dedicated bearer has been normally established;
the receiving module is further configured to receive second feedback signaling sent by the network server, wherein the second feedback signaling is used to notify that the media server has switched the bearer of the IMS call data from the IMS default bearer to the IMS dedicated bearer; and
the transmission module is further configured to transmit the IMS call data on the IMS dedicated bearer based on the second feedback signaling received by the receiving module.

15. The terminal according to claim 11, wherein the sending module is specifically configured to, in the case that the IMS dedicated bearer is abnormal during initiation of an IMS call, send the first signaling on the IMS default bearer to the network server; or
the sending module is specifically configured to, in the case that the IMS dedicated bearer is abnormal during an IMS call procedure, send the first signaling on the IMS default bearer to the network server.

16. A server, comprising:
a receiving module configured to receive second signaling sent by a network server, wherein the second signaling is used to notify a media server that an internet protocol multimedia subsystem (IMS) dedicated bearer is abnormal and to instruct the media server to switch a bearer of IMS call data of a terminal, the second signaling is generated based on first signaling received by the network server from the terminal, and the first signaling is used to notify that the IMS dedicated bearer is abnormal and to instruct the network server to send the second signaling to the media server;
a switching module configured to switch the bearer of the IMS call data from the IMS dedicated bearer to an IMS default bearer based on the second signaling received by the receiving module; and
a sending module configured to send third feedback signaling to the network server, wherein the third feedback signaling is used to notify the network server that the bearer of the IMS call data has been switched from the IMS dedicated bearer to the IMS default bearer.

17. The server according to claim 16, wherein the receiving module is specifically configured to receive a session initiation protocol (SIP) message or request-response signaling sent by the network server, wherein the SIP message is in a form of INVITE signaling.

18. The server according to claim 17, wherein the SIP message comprises at least one of the following: calling and called party numbers, a media type supported for transmission by the terminal, network capability information supported by the terminal, internet protocol (IP) information of the network server, and duration information of a bearer timeout timer; wherein
the duration information represents a timing for the media server to send a NOTIFY message to the network server, wherein the NOTIFY message is used to inquire whether the network server continues to maintain a current bearer.

19. The server according to claim 16, wherein the receiving module is further configured to, after the sending module sends the third feedback signaling to the network server, receive fourth signaling sent by the network server, wherein the fourth signaling is used to notify the media server that the IMS dedicated bearer has been normally established and to instruct the media server to switch the bearer of the IMS call data of the terminal;
the switching module is further configured to switch the bearer of the IMS call data of the terminal from the IMS default bearer to the IMS dedicated bearer based on the fourth signaling received by the receiving module; and
the sending module is further configured to send fourth feedback signaling to the network server, wherein the fourth feedback signaling is used to notify the network server that the bearer of the IMS call data has been switched from the IMS default bearer to the IMS dedicated bearer.

20. The server according to claim 19, wherein the receiving module is specifically configured to receive a session initiation protocol (SIP) message or request-response signaling sent by the network server, wherein the SIP message is in a form of CANCEL signaling.

21. An electronic device, comprising a processor and a memory, wherein the memory stores a program or instructions executable on the processor, and when the program or the instructions are executed by the processor, the steps of the IMS call establishment method according to any one of claims 1 to 5 are implemented.

22. A server, comprising a processor and a memory, wherein the memory stores a program or instructions executable on the processor, and when the program or the instructions are executed by the processor, the steps of the IMS call establishment method according to any one of claims 6 to 10 are implemented.

23. A readable storage medium, wherein the readable storage medium stores a program or instructions, and when the program or the instructions are executed by a processor, the steps of the IMS call establishment method according to any one of claims 1 to 5 are implemented.

24. A readable storage medium, wherein the readable storage medium stores a program or instructions, and when the program or the instructions are executed by a processor, the steps of the IMS call establishment method according to any one of claims 6 to 10 are implemented.
